## Europäisches Patentamt

## European Patent Office

## Office européen des brevets

(11) Numéro de publication: **0 153 216**
**B1**

## (12) FASCICULE DE BREVET EUROPÉEN

(45) Date de publication du fascicule du brevet: **12.08.87**

(21) Numéro de dépôt: **85400169.0**

(22) Date de dépôt: **01.02.85**

(51) Int. Cl.⁴: **C 01 B 21/16,** B 01 J 20/20, B 01 J 20/22

(54) Procédé de purification de solutions aqueuses d'hydrate d'hydrazine.

(30) Priorité: **14.02.84 FR 8402194**

(43) Date de publication de la demande:
**28.08.85 Bulletin 85/35**

(45) Mention de la délivrance du brevet:
**12.08.87 Bulletin 87/33**

(84) Etats contractants désignés:
**AT BE CH DE GB IT LI NL**

(56) Documents cité:
**FR-A-2 049 887**
**GB-A-1 146 291**
**US-A-3 976 756**
**US-A-4 040 990**

(73) Titulaire: **ATOCHEM, 4 & 8, Cours Michelet La Défense 10, F-92800 Puteaux (FR)**

(72) Inventeur: **Alicot, Michel, Route d'Arreau, F-65250 La Barthe de Neste (FR)**
Inventeur: **Pierre, Jacky, Chante Merle, F-65250 La Barthe de Neste (FR)**

(74) Mandataire: **Rochet, Michel, ATOCHEM Département Propriété Industrielle, F-92091 Paris la Défense Cédex 42 (FR)**

LIBER, STOCKHOLM 1987

## Description

La présente invention concerne un procédé de purification de l'hydrate d'hydrazine obtenue par oxydation de l'ammoniac en présence de composés carbonylés. Ces procédés, qui diffèrent en particulier par la nature de l'oxydant et par la nature des composés carbonylés mis en jeu, permettent d'obtenir l'hydrazine sous la forme de combinaisons organiques stables dans le milieu réactionnel. A titre d'illustration de ces procédés, on mentionnera notamment ceux décrits dans les brevets français 2.092.734, 2.324.618, les brevets allemands 1.088.939, 1.103.903 et 1.123.330, les brevets anglais 1.122.034 et 1.133.762, le brevet américain 3.976.756, le brevet japonais 706 532. D'une manière générale, l'hydrate d'hydrazine est obtenu à partir de ces combinaisons par hydrolyse acide ou par la seule action de l'eau dans des conditions définies de température et de pression comme décrit par exemple dans les brevets français 2.323.634 et 2.323.635 ou les brevets allemands 1.066.558 ou 1.130.797. L'hydrate d'hydrazine est obtenu sous la forme de solution aqueuse de concentration comprise entre 1 et 100 %, plus généralement entre 5 et 35 %.

La nature des réactions d'oxydation mises en jeu font que ces procédés génèrent en même temps que la combinaison organique stable de l'hydrazine, des sous-produits de natures diverses, composés d'atomes de carbone et d'hydrogène auxquels peuvent être associés des atomes d'oxygène et/ou d'azote. Ils sont formés soit pendant la réaction d'oxydation, soit pendant la réaction d'hydrolyse. Ainsi par exemple, ces produits dissous peuvent être les constituants principaux de la solution d'oxydation: azine, hydrazone, diazacyclopropane ... mais aussi les produits de condensation alcaline du dérivé carbonylé: cétoalcools, cétones insaturées, dihydropyridines, tétrahydropyrimidines, pipéridones ... ou encore des produits de réaction des composés précédents avec l'hydrazine: pyrazolines ...; enfin des produits ayant subi simultanément plusieurs des transformations chimiques précédentes. Plus précisément et sans limitation, ce sont soit des hydrocarbures, soit des composés comportant des fonctions cétones, alcools, époxydes, amines, amides, oximes, hydrazones, hydrazines, azines, les composés pouvant présenter une structure hétérocyclique du type pyrazoline, pyrazole, aziridine, pyrazine, pyridazine, triazole, imidazole, pyrrole, pyridine ... Ces sous-produits peuvent se retrouver dans la solution d'hydrate d'hydrazine; il est nécessaire, pour la purifier, d'avoir recours à des opérations de génie chimique appropriées telles que la distillation, l'extraction liquide-liquide. On parvient effectivement de la sorte à abaisser le taux de ces sous-produits jusqu'à une valeur inférieure à 1 %, plus généralement comprise entre 0,1 % et 0,3 %, valeurs en-dessous desquelles on ne peut descendre économiquement par de tels moyens, en raison de la complexité des équilibres mis en jeu lors de ces opérations de purification.

La présence de ces impuretés peut, dans un certain nombre d'applications, se révéler indésirable. On citera, entre autres, les utilisations de l'hydrate d'hydrazine comme matière première dans la fabrication de susbstances médicamenteuses ou comme composant de propergols de moteurs d'engins spéciaux (avions, satellites par exemple).

Il est connu dans l'art antérieur de procéder à la purification de solutions aqueuses d'hydrazine, par traitement sur des résines échangeuses d'ions (brevets américains 3.458.283, 3.652.218 et 3.740.436, brevet japonais 7 245 275). Mais ces composés ne concernent que l'élimination d'impuretés ioniques, telles que Na+, Cl- ... des solutions aqueuses d'hydrazine.

Le brevet français FR 2 049 887 décrit la purification de certains liquides par absorption des impuretés organiques sur des copolymères styreniques contenant de préférence des groupes nitro. Le brevet US 4 040 990 décrit la préparation d'absorbants par pyrolyse de résines styreniques. Ces deux brevets ne s'intéressent pas à l'hydrate d'hydrazine en solution.

L'invention concerne donc un procédé de purification de solutions aqueuses d'hydrate d'hydrazine, ledit procédé étant caractérisé par le fait que l'on traite l'hydrate d'hydrazine en solution aqueuse par une matière absorbante solide exempte de fonctions réactives vis-à-vis de l'hydrazine, ladite matière absorbante étant constituée de particules microporeuses de granulométrie moyenne inférieure à 5 mm, le volume poreux desdites particules étant compris entre 10 et 70 % et le diamètre moyen des pores étant inférieur à 50 nm (500 Å).

Les matières absorbantes présentement utilisées ont de préférence une granulométrie moyenne comprise entre 0,1 mm (100 µ) et 3 mm. Le volume poreux est de préférence compris entre 20 et 60 % et le diamètre moyen des pores est avantageusement compris entre 2 et 30 nm (20 et 300 Å).

On donne la préférence dans l'invention aux matières dont les caractéristiques précédentes sont telles que la surface spécifique soit comprise entre 10 et 1500 m$^2$/g et de préférence 100 à 1000 m$^2$/g.

Dans l'invention, le volume poreux est mesuré par la méthode d'absorption au mercure décrite par E.W. WASHBURN dans PROC. OF NAT. OF ACAD. OF SCIENCE OF UNITED STATES Vol. 7, pp. 115-116 (1921) et ROOTARE H.M., PREZELOW C. F. dans JOURN. OF PHYS. CHEM. Vol. 71, p. 2733 (1967), et par les isothermes d'absorption-désorption des gaz selon la méthode J.P. LE HAIR décrite dans le Bulletin de la Société Française de Céramique - 1971, p. 39.

Le diamètre moyen des pores est mesuré à partir des mesures précédentes.

La surface spécifique est mesurée par la méthode B.E.T.

Les matières absorbantes utilisables dans le procédé conforme à l'invention peuvent être choisies parmi les nombreuses familles de produits répondant aux caractéristiques mentionnées précédemment. Elles sont plus particulièrement choisies dans le groupe constitué par les composés purement carbonés, provenant notamment de la pyrolyse de composés hydrocarbonés de synthèse ou d'origine naturelle, et parmi les polymères ne comportant pas dans leur molécule de fonctions réactives vis-à-vis de l'hydrazine. Parmi ces polymères on mentionnera en particulier ceux ne comportant que des atomes de carbone et d'hydrogène dans leur molécule.

A titre d'illustration des composés hydrocarbonés de synthèse ou d'origine naturelle conduisant par pyrolyse aux composés purement carbonés mentionnés précédemment, on citera notamment l'acétylène, le méthane, le naphtalène, la noix de coco, les bois divers tel que le hêtre.

A titre d'illustration des polymères hydrocarbonés on mentionnera notamment le styrène, éventuellement substitué tel que le p.méthylstyrène, l'éthylstyrène, homopolymérisé(s) ou copolymérisé(s) entre eux et/ou avec le divinylbenzène, le trivinylbenzène, les alkyldivinylbenzène et alkyltrivinylbenzène, à raison de 1 à 3 ou 4 substituants alkyle ayant de 1 à 2 atomes de carbone sur le noyau benzénique.

Le traitement des solutions aqueuses d'hydrazine conformément au procédé selon l'invention peut être réalisé de différentes manières. On peut notamment utiliser l'une ou l'autre des techniques suivantes:

- Effectuer une percolation de la solution d'hydrate d'hydrazine à purifier sur un lit de matière absorbante qui est avantageusement sous une forme physique telle que soit assuré un contact optimum des sites absorbants et des solutés et une perte de charge compatible avec une vitesse de percolation permettant une productivité suffisante.

- Déplacer la matière absorbante verticalement, selon un procédé continu ou discontinu de haut vers le bas (colonne gravitaire) ou de bas en haut (colonne forcée) en suivant les techniques décrites par LEMIRGEAUX et ROQUES dans Chimie et Industrie, Génie Chimique, Vol. 105, n° 12 - Mai 1972.

Il va sans dire que le rapport volume de matière absorbante/volume de solution d'hydrate d'hydrazine et la durée du traitement sont fonction de nombreux paramètres, et en particulier de la teneur initiale et de la teneur finale souhaitée en impuretés, du type d'impuretés, de la nature et des caractéristiques physiques de la matière absorbante, du choix de la technique de traitement, telle que rappelée ci-avant, du débit de solution à traiter. A titre purement indicatif, on indiquera que, pour des solutions d'hydrate d'hydrazine contenant de l'ordre de 2000 ppm d'impuretés usuelles (cétone, alcool, azine ...exprimées en poids de carbone -) on peut aisément abaisser cette teneur à 2-300 ppm voire à 50-100 ppm avec un volume de substance absorbante représentant de $\frac{1}{50}$ à $\frac{1}{4}$ du volume de solution à traiter, sans avoir à régénérer ladite substance absorbante. Il est clair que les indications qui précèdent donnent un ordre de grandeur mais qu'on ne sortirait pas du cadre de l'invention en s'écartant de ces indications.

Lorsque les matières absorbantes sont saturées en impuretés, elles sont régénérables par lavage, avec de l'eau, avec des solutions aqueuses alcalines ou acides, ou, préférentiellement, avec un solvant: les solvants utilisables pour la régénération sont choisis, d'une manière non limitative, parmi les alcools, les cétones, les hydrocarbures aliphatiques ou aromatiques. A titre d'exemples non limitatifs, on peut citer: l'alcool méthylique, l'alcool éthylique, l'acétone, la méthyléthylcétone, le benzène, le xylène, l'hexane, le cyclohexane. Ces solvants sont recyclables après avoir été purifiés, par exemple par distillation.

Les exemples suivants illustrent l'invention sans la limiter.

**Exemple 1:**

Dans une colonne de 2 cm diamètre et 30 cm de hauteur, on dispose, supportés par un disque de verre fritté, 50 cm³ de copolymère styrène - divinylbenzène, préalablement mis en suspension dans une solution hydroalcoolique (eau - alcool méthylique) et lavé à l'eau. Ce copolymère se présenté sous forme de sphères dont le diamètre moyen des pores est de 5 nm (50 Å), la surface spécifique de 750 m²/g et le volume poreux de 51 %.

Au débit de 100 cm³/h on introduit par la partie supérieure de la colonne, une solution d'hydrate d'hydrazine 100 % ($N_2H_4.H_2O$) de teneur en carboné total de 900 ppm, obtenue dans un procédé d'oxydation de l'ammoniac par le peroxyde d'hydrogène en présence de méthyléthylcétone. Les impuretés sont essentiellement constituées de produits à fonction azine, hydrazone, amide et oxime. Après mise en équilibre de la colonne, en 5 heures 1/2 de percolation, on obtient 550 cm³ d'hydrate d'hydrazine de même concentration mais dont la teneur en carbone total est de 350 ppm.

La teneur en carbone total est mesurée par oxydation dans un courant d'oxygène à 950° C et sur catalyseur (oxyde de cobalt) des matières carbonées transformées en $CO_2$ puis dosées par spectrographie infrarouge.

**Exemple 2:**

Dans un appareillage identique à celui de l'exemple 1, contenant 50 cm³ de matière absorbante, décrite dans l'exemplé 1, au débit de 100 cm³/h, on introduit une solution d'hydrate d'hydrazine de titre 26 % dont la teneur en carboné total est de 1440 ppm. En 1 heure de percolation, on obtient 100 cm³ de solution d'hydrate d'hydrazine de titre équivalent, mais dont la teneur en carbone total est comprise entre 50 et 100 ppm. Après 5 heures de percolation, on a obtenu 500 cm³ de solution d'hydrate d'hydrazine de même titre, la teneur en carbone total étant de 200 ppm.

**Exemple 3:**

Dans un appareillage identiqué à celui de l'exemple 1, contenant 50 grammes de noir de carbone, préalablement désoxygéné, sous forme de bâtonnets extrudés de 1 mm de diamètre et de 3 mm de largeur, au débit de 100 cm³/h, on introduit une solution d'hydrate d'hydrazine de titre 26 % dont la teneur en carbone total est de 1440 ppm. En 3 heures de percolation, on obtient 300 cm³ de solution d'hydrate d'hydrazine mais dont la teneur en carbone total est de 250 ppm. Le volume poreux du noir de carbone est d'environ 50 %: 35 % des pores ont un diamètre inférieur à 1 nm (10 Å) et 60 % des pores ont un diamètre inférieur à 25 nm (250 Å).

**Exemple 4:**

Dans un appareillage identique à celui de l'exemple 1, contenant 50 cm³ de matière absorbante décrite dans l'exemple 1, au débit de 100 cm³/h, on introduit une solution d'hydrate d'hydrazine de titre 10 % et dont la teneur en carbone total est de 2400 ppm. En 2 heures 1/2 de percolation, on obtient 250 cm³ de solution d'hydrate d'hydrazine dont la teneur en carbone total est de 600 ppm.

**Exemple 5:**

Dans l'appareillage de l'exemple 1 on dispose, supportés par un disque de verre fritté, 50 cm³ de résine polystyrénique réticulée au divinylbenzène. Ce produit, sous forme de billes blanches dont le diamètre moyen des pores est de 7,5 nm (75 Å), a une surface spécifique de 600 m²/g de produit sec, la granulométrie étant comprise entre 0,3 et 1,2 mm.
Au débit de 100 cm³/h on introduit par la partie supérieure de la colonne de l'hydrate d'hydrazine titrant 10 %, contenant 2400 ppm de carbone total. En 2 heures 1/2 de percolation, on obtient 250 cm³ de solution d'hydrate d'hydrazine dont la teneur en carbone total est de 1000 ppm.

**Exemple 6:**

Dans un appareillage identique à celui de l'exemple 1 et contenant 50 cm³ de matière absorbante décrite dans l'exemple 1, au débit de 100 cm³/h, on introduit une solution d'hydrate d'hydrazine de titre 26 % et dont la teneur en carbone total est de 1440 ppm. En 4 heures de percolation, on constate que la teneur en carbone total de la solution d'hydrate d'hydrazine percolée, après être descendue à 180 ppm, remonte peu à peu à 600 ppm, indiquant le début de saturation du copolymère. En 2 heures de percolation supplémentaire, la teneur en carbone total atteint 650 ppm. On considère le copolymère saturé. On lave la résine avec 200 cm³ d'eau pour récupérer l'hydrate d'hydrazine, puis avec 150 cm³ d'alcool méthylique, puis avec 400 cm³ d'eau. Le copolymère est à nouveau prêt à être utilisé dans une nouvelle opération de purification d'hydrate d'hydrazine.
On obtient un résultat identique lorsqu'on utilise, à la place de l'alcool méthylique, 150 cm³ de méthyléthylcétone.

**Exemple 7:**

Dans une colonne de diamètre 3,8 cm et de hauteur 2 m sont disposés 800 cm³ de résine absorbante de l'exemple 1 selon le processus décrit dans l'exemple 1. A partir d'hydrate d'hydrazine titrant 99 % et contenant 2400 ppm de carbone total, on obtient, au débit de 400 cm³/h, 25 kg de solution d'hydrate d'hydrazine de même titre dont la teneur en carbone total est de 350 ppm.

**Exemple 8:**

On opère comme dans l'exemple 7, mais on alimente la colonne d'extraction par l'hydrate d'hydrazine au débit de 3000 cm³/h. On obtient 25 kg d'hydrate d'hydrazine dont la teneur en carbone total est de 350 ppm. Cet exemple montre que l'efficacité de l'extraction n'est pas affectée par une variation du débit de l'alimentation.

**Exemple 9:**

Dans un appareillage identique à celui de l'exemple 1, contenant 50 g de matière absorbante de l'exemple 1, on traite une solution aqueuse d'hydrate d'hydrazine titrant 55 % et contenant 1000 ppm de carbone total, obtenue selon un procédé d'oxydation de l'ammoniac par un composé halogéné minéral en présence d'une cétone. Au débit de 100 cm³/h, on obtient 1500 cm³ de solution d'hydrate d'hydrazine de titre identique dont la teneur en carbone total est abaissée à 300 ppm.

**Exemple 10:**

De façon identique à celle décrite dans l'exemple 9, à partir d'une solution aqueuse d'hydrate d'hydrazine obtenue par le même procédé que ci-dessus, titrant 96 % et contenant 1000 ppm de carbone total, on obtient 1500 cm³ de solution aqueuse d'hydrate d'hydrazine de même titre et contenant 300 ppm de carbone total.

**Revendications**

1. Procédé de purification de solutions aqueuses d'hydrate d'hydrazine, ledit procédé étant caractérisé par le fait que l'on traite l'hydrate d'hydrazine en solution aqueuse par une matière absorbante solide exempte de fonctions réactives vis-à-vis de l'hydrazine, ladite matière absorbante étant constituée de particules microporeuses de granulométrie moyenne inférieure à 5 mm, le volume poreux desdites particules étant compris entre 10 et 70 % et le diamètre moyen des pores étant inférieur à 50 nm (500 Å).

2. Procédé selon la révendication 1, caractérisé en ce que la surface spécifique des particules de matière absorbante est comprise entre 10 et 1500 m²/g, et de préférénce entre 100 et 1000 m²/g

3. Procédé selon l'une quelconque des revendications 1 ou 2, caractérisé en ce que la granulométrie moyenne des matières absorbantes est comprise entre 0,1 mm (100 μ) et 3 mm.

4. Procédé selon l'une quelconque des revendications 1 à 3, caractérisé en ce que le volume poreux est compris entre 20 et 60 % et le diamètre moyen des pores est compris entre 2 et 30 nm (20 et 300 Å).

5. Procédé selon l'une quelconque des revendications 1 à 4, caractérisé en ce que les matières absorbantes sont choisies parmi les composés purement carbonés.

6. Procédé selon la revendication 5, caractérisé en ce que les matières purement carbonées proviennent de la pyrolyse de composés hydrocarbonés de synthèse ou d'origine naturelle.

7. Procédé selon la revendication 6, caractérisé en ce que les composés hydrocarbonés sont choisis dans le groupe constitué par l'acétylène, le méthane, le naphtalène, la noix de coco, les bois divers et notamment le hêtre.

8. Procédé selon l'une quelconque des revendications 1 à 4, caractérisé en ce que les matières absorbantes sont choisies parmi les polymères ne comportant pas dans leur molécule de fonctions réactives vis-à-vis de l'hydrazine.

9. Procédé selon la revendication 8, caractérisé en ce que le polymère est choisi dans le groupe constitué par le styrène, éventuellement substitué tel que le p.méthylstyrène ou l'éthylstyrène, homopolymérisé (s) ou copolymérisé(s) entre eux et/ou avec le divinylbenzène, le trivinylbenzène, les alkyldivinylbenzènes et alkyltrivinylbenzènes, à raison de 1 à 3 ou 4 substituants alkyle ayant de 1 à 2 atomes de carbone sur le noyau benzénique.

10. Procédé selon l'une quelconque des revendications 1 à 9, caractérisé en ce qu'il consiste à effectuer une percolation de la solution d'hydrate d'hydrazine à purifier sur un lit de matière absorbante.

**Patentansprüche**

1. Verfahren zur Reinigung wässriger Lösungen von Hydrazinhydrat, dadurch gekennzeichnet, daß man das Hydrazinhydrat in wässriger Lösung mit einer festen absorbierenden Substanz behandelt, die im Hinblick auf das Hydrazin keine reaktiven Gruppen aufweist, wobei die absorbierende Substanz aus mikroporösen Partikeln mit einer mittleren Korngröße unterhalb von 5 mm besteht, wobei das Porenvolumen dieser Partikel bei zwischen 10 und 70 % liegt und der mittlere Porendurchmesser weniger als 50 nm (500 Å) beträgt.

2. Verfahren nach Anspruch 1, dadurch gekennzeichnet, daß die spezifische Oberfläche der Partikel der absorbierenden Substanz zwischen 10 und 1500 m²/g vorzugsweise zwischen 100 und 1000 m²/g beträgt.

3. Verfahren nach einem der Ansprüche 1 oder 2, dadurch gekennzeichnet, daß die mittlere Korngröße der absorbierenden Substanzen zwischen 0,1 mm (100 μ) und 3 mm liegt.

4. Verfahren nach einem der Ansprüche 1 bis 3, dadurch gekennzeichnet, daß das Porenvolumen zwischen 20 und 60 % beträgt und der mittlere Durchmesser der Poren zwischen 2 und 30 nm (20 und 300 Å) liegt.

5. Verfahren nach einem der Ansprüche 1 bis 4, dadurch gekennzeichnet, daß die absorbierenden Substanzen aus rein kohlenstoffhaltigen Verbindungen ausgewählt werden.

6. Verfahren nach Anspruch 5, dadurch gekennzeichnet, daß die rein kohlenstoffhaltigen Substanzen aus der Pyrolyse von Kohlenwasserstoffen synthetischen oder natürlichen Ursprungs hervorgehen.

7. Verfahren nach Anspruch 6, dadurch gekennzeichnet, daß die Kohlenwasserstoffverbindungen ausgewählt werden aus der Gruppe bestehend aus Acetylen, Methan, Naphtalin, Kokosnuss und verschiedenen Holzarten, insbesondere Buchenholz.

8. Verfahren nach einem der Ansprüche 1 bis 4, dadurch gekennzeichnet, daß die absorbierenden Substanzen ausgewählt werden aus den Polymeren, die im Molekül keine gegenüber Hydrazin reaktiven funktionellen Gruppen aufweisen.

9. Verfahren nach Anspruch 8, dadurch gekennzeichnet, daß das Polymer ausgewählt wird aus der Gruppe bestehend aus Styrol, gegebenenfalls substituiert, wie z. B. Paramethylstyrol oder Ethylstyrol, homopolymerisiert oder miteinander copolymerisiert und/oder mit Divinylbenzol, Trivinylbenzol, Alkyldivinylbenzol, Alkyltrivinylbenzol, mit 1 bis 3 oder 4 Alkylsubstituenten mit 1 bis 2 Kohlenstoffatomen am Benzolkern copolymerisiert.

10. Verfahren nach einem der Ansprüche 1 bis 9, dadurch gekennzeichnet, daß es darin besteht, die zu reinigende Lösung des Hydrazinhydrats durch ein Bett der absorbierenden Substanz durchsickern zu lassen.

**Claims**

1. Process for the purification of aqueous solutions of hydrazine hydrate, the said process being characterized in that the hydrazine hydrate, in aqueous solution, is treated with a solid absorbent free from groups which are reactive towards hydrazine, the said absorbent material consisting of microporous particles of mean particle size less than 5 mm, the pore volume of the said particles being between 10 and 70 % and the mean diameter of the pores being less than 50 nm (500 Å).

2. Process according to claim 1, characterized in that the specific surface area of the particles of absorbent material is between 10 and 1500 $m^2$/g, preferably between 100 and 1000 $m^2$/g.

3. Process according to any one of claims 1 or 2, characterized in that the mean particle size of the absorbent materials is between 0.1 mm (100 µ) and 3 mm.

4. Process according to any one of claims 1 to 3, characterized in that the pore volume is between 20 and 60 % and the mean diameter of the pores is between 2 and 30 nm (20 and 300 Å).

5. Process according to any one of claims 1 to 4, characterized in that the absorbent materials are chosen from among purely carbon-containing compounds.

6. Process according to claim 5, characterized in that the purely carbon-containing materials originate from the pyrolysis of synthetic or natural hydrocarbon compounds.

7. Process according to claim 6, characterized in that the hydrocarbon compounds are chosen from the group consisting of acetylene, methane, naphthalene, coconut, various woods and especially beech.

8. Process according to any one of claims 1 to 4, characterized in that the absorbent materials are chosen from among polymers whose molecule is devoid of groups which are reactive towards hydrazine.

9. Process according to claim 8, characterized in that the polymer is chosen from the group consisting of styrene which is optionally substituted, such as p-methylstyrene or ethylstyrene, homopolymerized or copolymerized with one another and/or with divinylbenzene, trivinylbenzene, alkyldivinylbenzenes and alkyltrivinylbenzenes, at the rate of 1 to 3 or 4 alkyl substituents having from 1 to 2 carbon atoms on the benzene nucleus.

10. Process according to any one of claims 1 to 9, characterized in that it consists in carrying out a percolation of the hydrazine hydrate solution, to be purified, on a bed of absorbent material.